# Europäisches Patentamt

# European Patent Office

# Office européen des brevets

(11) Veröffentlichungsnummer: **0 137 435**
**B1**

(12) **EUROPÄISCHE PATENTSCHRIFT**

(51) Int. Cl.⁴: **B 62 D 1/04,** B 62 D 5/06, B 60 K 37/00

(45) Veröffentlichungstag der Patentschrift:
**31.08.88**

(21) Anmeldenummer: **84111687.4**

(22) Anmeldetag: **29.09.84**

(54) Lenkeinrichtung und Instrumententräger an einer Zugmaschine.

(30) Priorität: **07.10.83 DE 3336545**

(43) Veröffentlichungstag der Anmeldung:
**17.04.85 Patentblatt 85/16**

(45) Bekanntmachung des Hinweises auf die Patenterteilung:
**31.08.88 Patentblatt 88/35**

(84) Benannte Vertragsstaaten:
**AT DE FR GB IT**

(56) Entgegenhaltungen:
**DE-B-1 258 744**
**FR-A-1 439 225**
**FR-A-2 110 054**
**FR-A-2 477 091**
**GB-A-993 017**
**US-A-3 223 193**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Emundts, Horst, Sommerdellenstrasse 88, D-4630 Bochum 6 (DE)**
Erfinder: **Kierspel, Christian, Mittelsteeg 10, D-5063 Overath (DE)**
Erfinder: **Kreutz, Josef, Alte Wipperfürther Strasse 258, D-5060 Bergisch- Gladbach (DE)**

EP 0 137 435 B1

## Beschreibung

Die Erfindung bezieht sich auf eine Lenkeinrichtung und Instrumententräger an einer insbesondere landwirtschaftlich nutzbaren Zugmaschine, bei der die Lenkkräfte vom Lenkrad über dessen Nabe direkt oder indirekt auf eine Lenkwelle und von dieser mechanisch, hydraulisch o. dgl. auf die Lenkhebel der entsprechenden Achse übertragen werden, mit einer im Kraftverlauf liegenden, durch eine lösbare Verriegelung gekoppelten Trennstelle, durch die zumindest das Lenkrad nach dem Entriegeln axial herausnehmnbar ist, wobei am Fahrerstand der Zugmaschine zum Umstecken des Lenkrades für die Benutzung desselben in Gegenfahrtrichtung eine Anordnung vorgesehen ist, die aus einem mit dem Lenkrad verbundenen Teil und zwei fahrzeugfesten, je einer Fahrtrichtung zugeordneten Teilen besteht, in die der mit dem Lenkrad verbundene Teil einsteckbar ist.

Eine derartige Lenkanordnung ist durch die DE-A-1 258 744 bekanntgeworden, wobei ein über Kettenstränge und Kettenräder betriebener Lenkmechanismus vorgesehen ist. Dabei sind zum Umstecken des Lenkrades und der Lenkwelle zwei über die Kettenstränge drehbar miteinander gekoppelte Kettenträger angeordnet, die je eine damit verbundene Steckverbindung zur drehfesten Aufnahme des unteren Endes der Lenkwelle aufweisen. Auf diese Weise kann das Lenkrad durch Umstecken je nach der vorgesehenen Fahrtrichtung wahlweise in die eine oder die andere Stellung gebracht werden. Auch der Fahrersitz ist umsteckbar ausgebildet, wobei die jeweils nicht benutzte Lenksäule als Halterung dient. Allerdings ist bei der bekannten Lenkanordnung von einem Instrumentträger nichts erwähnt. Es ist daher anzunehmen, daß nur für die Hauptfahrtrichtung Instrumente vorgesehen sind, so daß der Fahrer bei Rückwärtsfahrt keine Instrumente zur Verfügung hat. Andernfalls müßte für jede Fahrtrichtung je eine Instrumenteneinheit vorhanden sein, was jedoch relativ aufwendig wäre.

Es ist ferner aus der DE-A-2 051 208 in Verbindung mit einer Lenkanordnung bekannt, bei einer zur Lenkbetätigung in zwei Fahrtrichtungen mit hydraulischer Hilfskraft arbeitenden Lenkeinrichtung das Lenkrad auf seiner Lenkwelle umsteckbar anzuordnen. Hierbei ist jedoch eine komplette zweite Lenkeinrichtung für die Rückwärtsfahrt vorgesehen, bei der nur das Lenkrad austauschbar ist.

Schließlich ist es aus der GB-A-993 017 bekannt, im Lenkrad eines Kraftfahrzeugs eine feststehende Platte anzuordnen, die als Träger für Bedienungselemente, wie Schalter für Licht, Horn, Wischer usw., dient. Die elektrischen Leitungen für die Schalter o. dgl. sind durch ein zentrales Rohr innerhalb der Lenksäule hindurchgeführt.

Ausgehend von diesen Erkenntnissen liegt der Erfindung die Aufgabe zugrunde, mit einfachen Mitteln eine Lenkeinrichtung mit einem umsteckbaren Lenkrad zu schaffen, bei der lediglich ein für beide Fahrtrichtungen nutzbarer Instrumententräger erforderlich ist.

Die Aufgabe wird erfindungsgemäß gelöst durch die Kombination folgender, teils für sich bekannter Merkmale:

a) Am Lenkrad sitzt zentral ein mit elektrischen Instrumenten ausgestatteter, feststehender Bremsträger;

b) der Instrumententräger ist an einem Ende eines drehfesten Rohres befestigt, das die Nabe des Lenkrades durchsetzt und mit dem anderen Ende feststellbar bzw. axial herausnehmbar in einen fahrzeugfesten Gehäuseteil eingreift;

c) die elektrischen Leitungen für die Instrumente im Instrumententräger verlaufen durch das Rohr zu einem an diesem angeordneten Teil einer Steckverbindung, von deren anderem Teil sich je ein Exemplar in den beiden fahrzeugfesten Teilen der Umsteckanordnung befindet, wobei der eine und/oder der andere Teil der Steckverbindung gegenüber seiner Halterung elastisch abgestützt ist und

d) die Verriegelung des Lenkrades ist als federbelastete Raste ausgebildet und hat mehrere axial mit Abstand angeordnete Raststellen zur axialen Einstellung des Lenkrades.

Durch diese kompakte Ausbildung einer Lenkeinrichtung ist das Umstecken derselben für die Benutzung in Gegenfahrtrichtung unter einfacher Handhabung möglich, wobei für beide Fahrtrichtungen sämtliche Instrumente stets im Sichtbereich des Fahrers liegen.

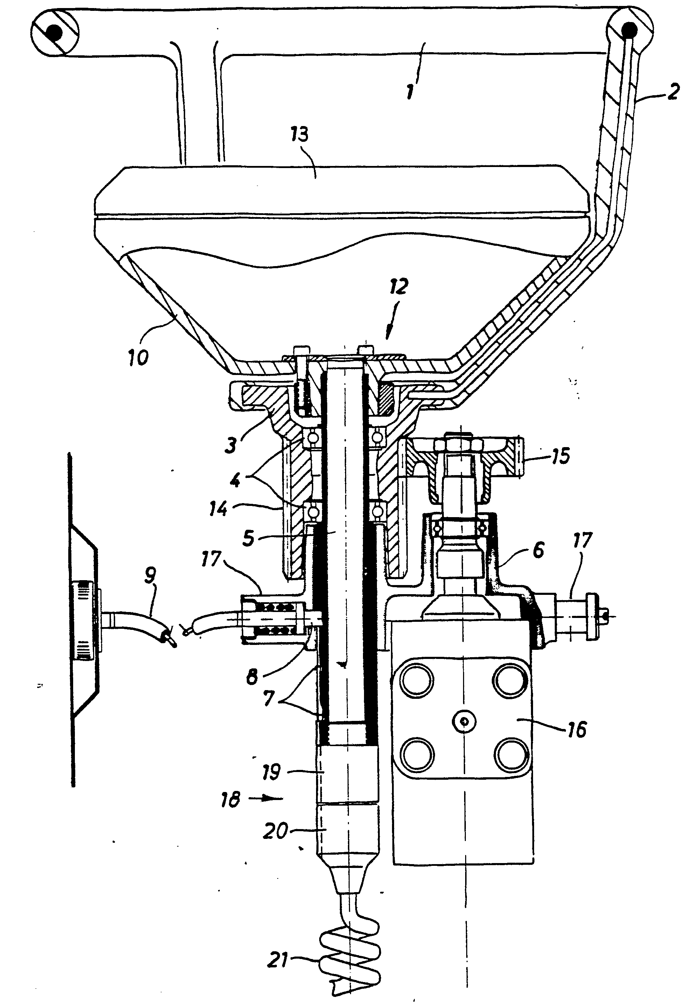

Ein Ausführungsbeispiel der Erfindung wird im folgenden anhand der Zeichnung näher beschrieben. Die einzige Abbildung zeigt einen Längsschnitt durch eine umsteckbare Lenkeinrichtung gemäß der Erfindung.

Die dargestellte Lenkeinrichtung hat einen Lenkradkranz 1, der mittels drei nach innen abgewinkelten Speichen 2 mit einer Lenkradnabe 3 starr verbunden ist. Die Lenkradnabe 3 sitzt drehbar über zwei Wälzlager auf einem tragenden Rohr 5, das axial verschiebbar in ein Gehäuseteil 6 eingreift.

In dem tragenden Rohr 5 sind in Längsrichtung mit Abstand hintereinander mehrere Ausnehmungen 7 zum Eingreifen einer federbelasteten Raste 8 vorgesehen. Durch diese Anordnung kann die Lenkeinrichtung bei Bedarf in axialer Richtung verstellt werden. Die Raste 8 ist zur Fernbetätigung an einen Bowdenzug 9 angeschlossen. Innerhalb des Lenkradkranzes 1 sitzt ein schüsselförmiger Hohlkörper 10, der über eine flanschartige Verschraubung 12 auf dem tragenden Rohr 5 befestigt ist. Der Hohlkörper 10 hat an seiner dem Lenkradkranz 1 zugewandten Oberseite einen Deckel 13, der als Instrumententräger dient.

Die Lenkradnabe 3 ist mit einer Außenverzahnung 14 versehen, die mit einem Zahnrad 15 einer hydraulischen Servolenkung 16 im Eingriff steht. Beiderseits am Gehäuseteil 6 der Lenkeinrichtung angeordnete Zapfen 17 dienen als Schwenklager der Lenkeinrichtung und ermöglichen das Einstellen einer gewünschten Höhenlage des Lenkradkranzes 1.

Die Zuführung der elektrischen Leitungen zu den im Deckel 13 des Hohlkörpers 10 anzuordnenden Instrumente erfolgt durch das tragende Rohr 5, das zum Trennen der Leitungen beim Umstecken der Lenkeinrichtung am unteren Ende mit einer zweiteiligen Steckverbindung 18 versehen ist. Das obere Teil 19 der Steckverbindung 18 ist mit dem tragenden Rohr 5 verschraubt, während an das untere Teil 20 der Steckverbindung 18 zur Weiterführung der elektrischen Leitungen ein durch Spiralform längenveränderliches Kabel 21 angeschlossen ist.

## Patentanspruch

Lenkeinrichtung und Instrumententräger an einer insbesondere landwirtschaftlich nutzbaren Zugmaschine, bei der die Lenkkräfte vom Lenkrad (1) über dessen Nabe (3) direkt oder indirekt auf eine Lenkwelle und von dieser mechanisch, hydraulisch o. dergl. auf die Lenkhebel der entsprechenden Achse übertragen werden, mit einer im Kraftverlauf liegenden, durch eine lösbare Verriegelung (7, 8) gekoppelten Trennstelle, durch die zumindest das Lenkrad (1) nach dem Entriegeln axial herausnehmbar ist, wobei am Fahrerstand der Zugmaschine zum Umstecken des Lenkrades (1) für die Benutzung desselben in Gegenfahrtrichtung eine Anordnung vorgesehen ist, die aus einem mit dem Lenkrad (1) verbundenen Teil und zwei fahrzeugfesten, je einer Fahrtrichtung zugeordneten Teilen besteht, in die der mit dem Lenkrad (1) verbundene Teil einsteckbar ist,
gekennzeichnet durch die Kombination folgender, teils für sich bekannter Merkmale:

a) am Lenkrad (1) sitzt zentral ein mit elektrischen Instrumenten ausgestatteter feststehender Instrumententräger (10, 13);

b) der Instrumententräger (10, 13) ist an einem Ende eines drehfesten Rohres (5) befestigt, das die Nabe (3) des Lenkrades (1) durchsetzt und mit dem anderen Ende feststellbar bzw. axial herausnehmbar in einen fahrzeugfesten Gehäuseteil (6) eingreift;

c) die elektrischen Leitungen für die Instrumente im Instrumententräger (10, 13) verlaufen durch das Rohr (5) zu einem an diesem angeordneten Teil (19) einer Steckverbindung (18), von deren anderem Teil (20) sich je ein Exemplar in den beiden fahrzeugfesten Teilen der Umsteckanordnung befindet, wobei der eine und/oder der andere Teil (19 bzw. 20) der Steckverbindung (18) gegenüber seiner Halterung elastisch abgestützt ist und

d) die Verriegelung (7, 8) des Lenkrades (1) ist als federbelastete Raste ausgebildet und hat mehrere axial mit Abstand angeordnete Raststellen (7) zur axialen Einstellung des Lenkrades (1).

## Claim

A steering appliance including an instrument support of a tractor, especially one to be used for agricultural purposes, in which the steering force is transmitted directly or indirectly from the steering wheel (1) _via_ the latter's hub (3) to the steering shaft and hence mechanically, hydraulically or by similar means to the steering arms of the appropriate axle, in which the appliance includes a disconnecting point which is disposed in the path of the force transmission, which is connected by a disengageable locking mechanism (7, 8) and which, when the mechanism has been disengaged, allows at least the steering wheel (1) to be removed along its axial direction, in which, for the purpose of relocating the steering wheel (1) to permit its use in the opposite driving direction, the driver's platform of the tractor is provided with a device comprising one part connected to the steering wheel (1) and two other parts fastened in the tractor and each associated with a respective one of the driving directions, and in which the one, driving wheel-connected, part is insertable into either of the two other parts, characterized by a combination of the following features, some of which are known _per se_:

a) the driving wheel (1) carries at its centre the stationary instrument support (10, 13) fitted with electric instruments;

b) the instrument support (10, 13) is fastened to one end portion of a rotationally fast tube (5), which extends through the hub (3) of the steering wheel (1), and the other end portion of which lockably yet axially removably engages a casing (6) immovably mounted in the tractor;

c) electric leads for the instruments carried by the instrument support (10, 13) pass through the tube (5) to one, tube-mounted, component (19) of a plug connection (18) while a respective specimen of the plug connection's other component (20) is mounted in each of the two tractor-fastened parts of the relocation device, in which the one and/or the other component (19 and/or 20) of the plug connection (18) is resiliently supported in its, or its respective, mounting; and

d) the locking mechanism (7, 8) of the steering wheel (1) is constructed to include a spring-biased detent and a number of notches (7) axially spaced from each other for the axial setting of the steering wheel (1).

## Revendication

Dispositif de direction et support d'instrument pour tracteur utilisable en particulier comme tracteur agricole, sur lequel l'effort de direction du volant (1) sur son moyeu (3) est transmis directement ou indirectement à une colonne de direction et, à partir de celle-ci, mécaniquement, hydrauliquement ou par voie analogue à la barre de direction de l'axe correspondant, avec un point de rupture couplé à la ligne de transmission d'effort par un verrouillage amovible (7, 8) grâce auquel le volant 1 au moins peut être extrait après déverrouillage axial, et dans lequel est prévu, sur le siège du conducteur du tracteur pour l'utilisation de ce dernier en marche arrière, un système constitué d'une partie liée au volant (1) et de deux parties solidaires du véhicule disposées chacune pour correspondre à une direction de conduite, dans lesquelles le volant (1) est enfichable, dispositif caractérisé par la combinaison suivante de caractéristiques partiellement connues en soi;

a) au centre du volant (1) est placé un support d'instruments (10, 13) fixe équipé des appareils électriques;

b) le porte-instruments (10, 13) est fixé à une extrémité d'un tube rigide (5) qui traverse le moyeu 3 du volant (1) et s'engage par son autre extrémité dans la partie de la carrosserie 6 solidaire du véhicule de façon à pouvoir être inséré ou extrait;

c) les conducteurs électriques des appareils montés dans le support d'instrument (10, 13) traversent le tube (5) pour aller vers une des parties (19) d'une connexion placée sur celui-ci, en partant de l'autre partie (20) dont un exemplaire se trouve dans les deux parties solidaires du véhicule du système d'enfichage, l'une ou l'autre des parties (19, 20) de la liaison enfichable (18) s'appuyant élastiquement sur son support, et

d) le verrouillage (7, 8) du volant (1) est réalisé sous la forme de crans d'arrêt poussés par un ressort et possède plusieurs positions de verrouillage (7) disposées à un certain intervalle axial pour l'introduction axiale du volant (1).